# EUROPEAN PATENT SPECIFICATION

(11) **EP 1 147 673 B1**
(45) Date of publication and mention of the grant of the patent: **13.09.2006**
(21) Application number: 00901623.9
(22) Date of filing: 14.01.2000
(51) Int. Cl.: H04Q 7/24, H04Q 11/04

(54) **FLOW CONTROL METHOD IN A TELECOMMUNICATIONS SYSTEM**
FLUSSSTEUERUNGSVERFAHREN IN EINEM TELEKOMMUNIKATIONSSYSTEM
PROCEDE DE CONTROLE DE FLUX DANS UN SYSTEME DE TELECOMMUNICATIONS

(30) Priority: 15.01.1999 FI 990071
(43) Date of publication of application: 24.10.2001
(73) Proprietor: Nokia Corporation, 02150 Espoo (FI)
(72) Inventor: RÄSÄNEN, Juha, FIN-02660 Espoo (FI); OHVO, Mikko, FIN-04660 Numminen (FI)
(74) Representative: Äkräs, Tapio Juhani
(86) International application number: PCT/FI2000/000025
(87) International publication number: WO 2000/042792

(56) References cited:
- EP-A2- 0 798 943
- WO-A1-97/25824
- WO-A1-97/34392
- WO-A1-99/19999
- WO-A1-99/33319

## Description

### Field of the Invention

The invention relates to flow control in data transmission in telecommunications systems, particularly in wireless telecommunications systems.

### Background of the Invention

Wireless communications systems refer generally to any telecommunications system which enables wireless communication between the users and the network. In mobile communications systems users are capable of moving within the service area of the system. A typical mobile communications system is a public land mobile network (PLMN).

The present third generation mobile systems, such as Universal Mobile Communications system (UMTS) and Future Public Land Mobile Telecommunications system (FPLMTS), later renamed as IMT-2000 (International Mobile Telecommunication 2000), are being developed. The UMTS is being standardized in the ETSI (European Telecommunication Standards Institute) whereas the ITU (International Telecommunication Union) is defining the IMT-2000 system. The radio interface is likely to be based on a wide band CDMA (Code Division Multiple Access), and therefore the third generation systems are often referred to as wide band CDMA systems (WCDMA). These future systems are basically very alike.

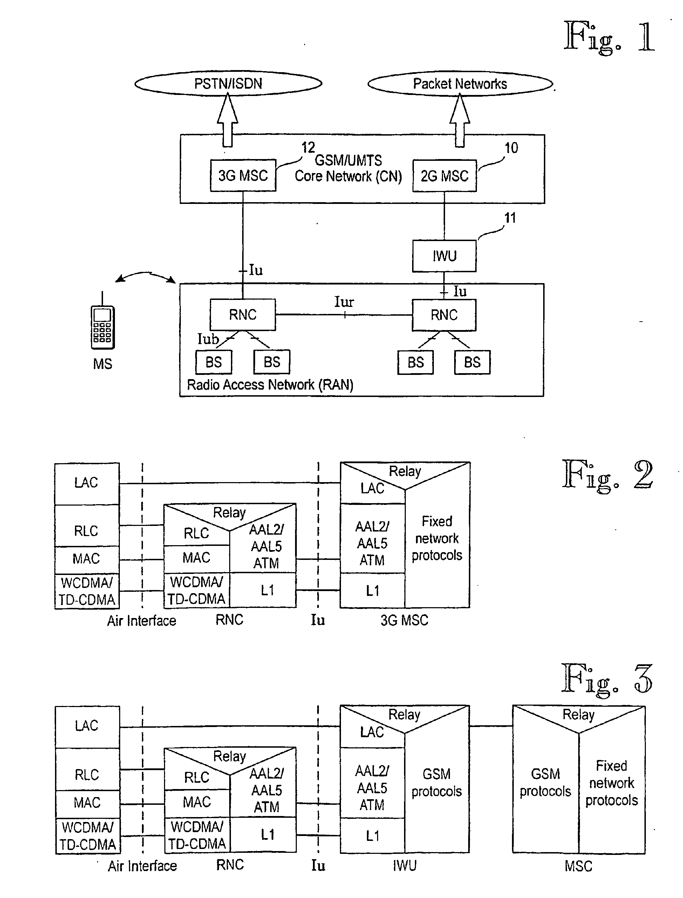

Figure 1 shows a simplified UMTS architecture with external reference points and interfaces to the UMTS terrestrial radio access network, UTRAN. The UTRAN consists of a set of radio access networks RAN (also called radio network subsystem RNS) connected to the core network (CN) through the interface lu. These radio network subsystems can be interconnected together through an interconnection point (reference point) lur. The interfaces lu(s) and lur are logical interfaces. The lur can be converged over physical direct connection between RANs or via any suitable transport network. Each RAN is responsible for the resources of its set of cells. On each connection between a mobile station MS and the UTRAN, one RAN is a serving RAN. A RAN consists of a radio network controller RNC and a multiplicity of base stations BS. The RNC is responsible for the handover decisions that require signalling to the MS. The base stations are connected to the RNC through the lub interface. The core network CN is a conventional or future telecommunications network modified to efficiently utilize the UTRAN in wireless communication. Telecommunications networks that are thought to be suitable core networks include second generation mobile communications systems, such as GSM, and other telecommunications systems, such as ISDN (Integrated Services Digital Network), BISDN (Broadband ISDN), PDN (Packet Data Network), etc.

Transition to the use of third generation mobile systems will occur in steps. In the first step the 3G radio access network will be introduced into the 2G network infrastructure. Such a "hybrid system" is illustrated by the RNC1 connected to a 2GMSC10 in Fig.1. As the 3G radio access network will not be compatible to the 2GMSC, it is apparent that such a mixed architecture requires interworking between the 2G and the 3G elements. This interworking is typically depicted as an interworking unit (IWU), such as IWU11 in Fig. 1. The general requirement is that no modifications are allowed in the 2G system (in the 2GMSC), and thereby the interface between the 2MSC and the IWU must be a pure A interface according to the GSM specifications. Later the development will result in a situation where pure 3G mobile systems exist side by side with the 2G mobile systems or the hybrid systems. In Figure 1, the RNC2 and the third generation MSC12 illustrate a pure 3G system.

Figure 2 illustrates protocol stacks which may be employed in a pure 3G mobile system. A traffic channel (the user plane) layer between the mobile station MS and the RNC uses a radio link control (RLC) protocol and the medium access control (MAC). The RLC provides a radio-solution dependent on a reliable link over the radio path. It takes care of segmentation and assembly of the data from and to the upper layer before and after transmission over the radio path, respectively, as well as of retransmissions. Under the RLC the MAC function controls the mapping of the RLC protocol data units (RLC-PDUs) into physical channels in the physical layer. The physical layer includes all the schemes and mechanisms used to make communication possible on the radio channel. These mechanisms include, for example, modulation, power control, coding and timing. Wide band CDMA (WCDMA) and time division CDMA (TD-CDMA) are mentioned as examples of multiple access methods which can be used in the radio interface.

In the interface lu between the radio network controller RNC and the mobile switching centre MSC or the IWU, a potential candidate for transfer technique is the ATM (Asynchronous Transfer Mode). The ATM transmission technique is a switching and multiplexing solution particularly related to a data link layer (i.e. OSI layer 2, hereinafter referred to as an ATM layer). In the ATM data transmission the end users' data traffic is carried from a source to a destination through virtual connections. Data is transferred over switches of the network in standard-size packets called ATM cells. The ATM cell comprises a header, the main object of which is to identify a connection number for a sequence of cells forming a virtual channel for a particular call. A physical layer (i.e. OSI layer 1) may comprise several virtual paths multiplexed in the ATM layer. The ATM layer contains an ATM adaptation layer (AAL) which enhances the service provided by the ATM layer to support functions required by the next higher layer. The AAL performs functions required by the user and control and management planes and supports the mapping between the ATM layer and the next higher layer. The functions performed in the AAL depend upon the higher layer requirements. At the moment there are three different types of AAL, namely type 1 AAL (AAL1), type 2 AAL (AAL2) and type 5 AAL (AAL5).

A further retransmitting and error correcting protocol (LAC, Link Access Control) may or may not be specified to be used between the MS and the RNC or between the MS and the MSC (or the IWU), as shown in Figures 2 and 3. The LAC, if any, may be similar to the radio link protocol (RLP) employed in the GSM system. The circuit switched leg from the MSC to the fixed network uses standard PSTN or ISDN protocols (e.g. ISDN V.120) or possibly some other protocols on a dedicated connection.

Figure 3 illustrates protocol stacks in a hybrid system in which a 3G radio access is connected to a 2GMSC via an interworking unit (IWU). In this case the ATM connection is terminated in the IWU. The leg between the IWU and the 2GMSC uses standard GSM protocols (the interface A). The interface between the MS and the RNC as well as the interface lu are between the RNC and the IWU are similar to those described with reference to Figure 1.

The data rates on the concatenated legs (e.g., MS-RNC, RNC-MSC, MSC-fixed network) may be different in a circuit switched data call. The legs may have different nominal rates due to the different capacity of the channels and/or various retransmission conditions may make the effective data rate of a leg lower than the nominal data rate. Retransmissions can take place both on the MS-RNC leg with the MAC/RLC protocol (and possibly with the LAC protocol) and on the MSC-fixed network leg with the V.120 protocol, for example. If the LAC is implemented between the MS and the MSC (or the IWU), retransmissions can take place on this leg too on a higher protocol level.

The MAC/RLC and LAC protocols and many fixed network protocols, such as V.120, have inherent flow control mechanisms. The flow control is used by a receiver at one end of the leg or connection to control the data transmission from a transmitter at the other end of the leg or connection. When the receiver is not able to process e.g. forward the data at the same speed as it is received from the leg or connection, the receiving buffer starts to fill up. In such a situation the receiver may send a flow control ON request to the transmitter, which goes into a 'flow control active' mode. In the 'flow control active' mode the transmitter ceases the transmission of new data to the receiver or decreases the data rate. Moreover, in case of concatenated legs, the transmitting end may also activate the flow control in the previous leg in order to avoid the filling up of the receiving buffer since it is not able to forward the received data in the 'active flow control' mode. As a result, the overflow of receiving buffers and discarding of user data can be avoided in each leg of the end-to-end connection and thereby over the whole end-to-end connection. As a result data integrity is also maintained.

However, no end-to-end connection related flow control is supported by the current ATM specifications. The ATM only supports flow control from the user to the network. If the flow control is active, the network discards cells instead of sending them to the user. Another flow control mechanism supported by the ATM is based on the recognition of a congestion in the network; in case of congestion lower priority cells are discarded by the network. The discarding of data will deteriorate the data integrity.

The fact that the end-to-end flow control is not supported by the ATM results in problems when the ATM is used in the interface lu between the RNC and the 3GMSC or the IWU, as shown in Figures 2 and 3. More particularly, one leg along the end-to-end connection consisting of various concatenated legs does not support flow control, and therefore the end-to-end flow control fails. Let us study the situation more carefully with respect to Figures 2 and 3. In case there is no LAC over any of the legs or the LAC is operating between the MS and the RNC only, the current flow control mechanisms cannot guarantee data integrity in a circuit switched data call in the 3G mobile network using the ATM connection between the RNC and the MSC (or the IWU). The flow control activated towards the ATM leg does not stop sending data from the sending entity but leads to an overflow of receiving buffers or to discarding of ATM cells carrying user data. In case the LAC is operating between the MS and the MSC (or the IWU), the current flow control mechanisms require a huge buffer (a whole LAC retransmission window) in the RNC to guarantee the data integrity in a circuit switched data call in the 3G network using the ATM connection between the RNC and the MSC (or the IWU). The flow control towards the ATM leg does not stop sending data from the sending entity but leads to an overflow of the receiving buffer or to discarding of ATM cells carrying user data. In the latter case the use of the huge buffer in order to maintain the integrity of the data is very impractical due to the memory requirements in the RNC. In any case this will not work at all if there is no LAC at all or the LAC operates only between the MS and the RNC.

A similar problem may be encountered in any telecommunications system in which one or more of the concatenated connection legs do not support flow control.

EP 0798943 discloses a method for queuing ATM cells during a handoff in a mobile communication system.

### Disclosure of the Invention

An object of the invention is to overcome the above problems in the flow control in telecommunications systems.

An aspect of the present invention is a data transmission method in a telecommunications system according to claim 1.

Another aspect of the present invention is a telecommunications system according to claim 13.

A further aspect of the present invention is a network node according to claim 23.

In the present invention flow control information is tunnelled over the leg which does not support flow control on a lower transmission protocol layer underlying a user .level. The nodes at the both ends of the leg are arranged to use the flow control information to control the data flow on the lower transmission protocol level of the leg. In other words, the transmission of new data on the lower transmission protocol level is ceased or the data rate is decreased when the flow control information activates the flow control in the transmitting node, and similarly, the transmission of new data on the lower transmission protocol level is restarted or the data rate is increased when the conveyed flow control information deactivates the flow control. The need of flow control may be recognized from the receiving buffer status on the lower transmission protocol level or from incoming flow control information received over the following leg of the connection in the downlink direction.

In order to implement the flow control, the flow control information may be employed by the user layer protocol entity. The user layer entity may implement the above flow control by controlling the data input from the user layer to the underlying lower transmission protocol layer, and/or by activating the flow control mechanism of the lower transmission protocol layer of the previous leg in the uplink direction, e.g. by mapping or converting the tunnelled flow control information into the flow control information according to the protocol of the next leg. In the latter case the lower layer protocol entity of the previous leg in the same node may stop forwarding new data to a leg not supporting the flow control, and/or the respective lower protocol entity at the far end of the previous leg may stop sending new data. In each case the data flow on the lower transmission protocol level of the leg not supporting the flow control can be controlled and the overflow of data buffers or discarding of data can be avoided in each leg of the end-to-end connection. As a result, the integrity of the data can be assured with the lower level flow control mechanisms only, without any need for high-level flow control. Also large buffers will be avoided. The inventive concept also allows, however, the use of a high-level protocol, such as the LAC, in one of the legs of the connection or over the whole end-to-end connection.

The flow control information may be tunnelled over the leg not supporting the flow control as in-channel signalling or in out-channel signalling associated with a connection.

In the preferred embodiment of the invention the connection leg not supporting the flow control is an ATM connection, and the lower transmission protocol level includes an ATM adaptation layer. In order to implement the in-channel signalling embodiment, flow control information may be inserted into the ATM adaptation layer service data unit which is then transported over the leg not supporting the flow control to the other end in accordance with an ATM network protocol. At the other end the flow control information is extracted from the ATM adaptation layer service data unit. In the preferred embodiment of the invention, the flow control information is inserted into the user data field of the ATM adaptation layer service data unit. The in-channel signalling approach is a very flexible and simple way to arrange the tunnelling of the flow control information. In the out-channel signalling approach, some modification in the signalling messages may be required, depending on the signalling system used.

### Brief Description of the Drawings

The invention will now be described by means of preferred embodiments with reference to the attached drawings, in which
Figure 1 shows a simplified UMTS architecture,
Figure 2 illustrates the protocol stacks which may be used in a pure third generation mobile system,
Figure 3 shows protocol stacks which may be used in a mixed 3G and 2G mobile system,

### Preferred Embodiments of the Invention

The preferred embodiments of the invention are described in the following as implemented in the third generation mobile system when the transport network is an ATM network. However, the aim is not to restrict the invention to these embodiments. The invention is applicable to be used in any telecommunications system in which an intermediate connection leg fails to support any lower level flow control mechanism while such a flow control mechanism is supported by the connection legs or equipment to which the intermediate leg is connected to. As used herein, the term leg may also refer to a user interface between a node and user equipment or application connected thereto.

The architecture of the UMTS access network was described above with reference to Figure 1, and examples of the protocol stacks were illustrated in Figures 2 and 3.

With reference to Figures 2 and 3, the relay layer in the RNC and in the 3GMSC or the IWU illustrates any high-layer protocols or entities required. In the UTRAN reference model as well as in the ATM reference model, these higher layers are defined to include a user plane and the control plane. In the UTRAN the control plane is further divided into a radio network control plane and a transport network control plane for radio network control and signalling. The transport network control plane is designed for the ATM based transport network in the interface lu. Both the standardized ATM connection control signalling (PNNI, UNI, BISUP) and AAL2/AAL5 signalling protocol are available. The user (the protocol entity) in the user or control plane has an access to the underlying ATM adaptation layer, or even to the ATM layer, through an ATM adaptation layer service access point (AAUSAP) both in the RNC and in the 3GMSC (Figure 2) or the IWU (Figure 3). Thereby, the AAL service provides a capability to transfer ATM adaptation layer service data units (AAL-SDU) from one AA-SAP to one other AAL-SAP in the interface lu through the ATM network. In the RNC the same user entity or a user entity it co-operates with has access to a RLC entity in the RNC-MS leg. In the 3GMSC the AAL-SAP user is the LAC and/or the interworking function on the relay level. The interworking function has access to a protocol employed on the lower transmission protocol level in a fixed network, such as V.120. Also in the IWU the AAL-SAP user is the LAC and/or the interworking funtion on the relay level. The interworking function has access to an entity in the lower level GSM protocol, such as RLP or RA (rate adaption), employed in the IWU-MSC leg in Figure 3. In the 2GMSC the relay layer provides standard interworking between the GSM protocols and the fixed network protocols.

As noted above, the ATM leg does not support a flow control mechanism which would assure the data integrity. Therefore, in accordance with the present invention, the higher layer entities in the RNC, the 3GMSC and the IWU are provided with the capability to recognize a need for flow control in the ATM leg and to tunnel the associated flow control information over the ATM leg to the-high level entity at the transmitting end. The transmitting entity is arranged to implement the flow control in the ATM leg on the basis of the tunnelled information.

The flow control mechanism may be a mechanism using Flow Control ON/Flow Control OFF type of flow control. In this case, when the flow control is set ON by the receiving network element on one side of the tunnel, e.g. in the RNC, the transmitting network element, e.g. the MSC, on the other side of the tunnel sends no data until flow control is set OFF. Alternatively, a dynamic flow control mechanism may be used. In this mechanism, the RNC tells the MSC to reduce the data rate when the need for flow control is recognized. For example, the data rate may be reduced to 75 %, 50 %, 25 % or 0 % of the nominal data rate of the connection. In the following, the prefererred embodiments are described with the ON/OFF mechanism, but alternatively the dynamic flow control can be used in these embodiment.

The first embodiment of the invention in which the tunnelling is implemented by in-channel signalling will now be described.

Let us assume that data is transmitted from the mobile station MS to the 3GMSC and further to the fixed network in the system of Figure 2. A RLC/MAC link with flow control is established between the MS and RNC. An ATM connection is established between the RNC and the 3GMSC. An LAC protocol link is established between the MS and the 3GMSC. A fixed network traffic channel using V.120 protocol is established between the 3GMSC and the other party in the fixed network.

The need for the flow control is recognized by the user of the AAL-SAP in the RNC or the 3GMSC. The need for the flow control can be recognized, for example, from the lower layer receiving or transmitting buffer status in the ATM leg or from the flow control request incoming from the following leg in the downlink, i.e. from the mobile station MS to the RNC or from the PSTN/ISDN to the MSC or IWU. According to the in-channel signalling approach of the present invention, a flow control request is provided by the user of the AAL-SAP upon detecting the need to activate or deactivate the flow control towards the ATM leg. The flow control request is packed into the AAL-SDU, preferably into the payload part of it. In the preferred embodiment of the invention the packing is performed in the service-specific convergence sub-layer (SSCS) which is the uppermost sub-layer in the AAL layer and can be modified in this respect. The user of the AAL-SAP is arranged to, via the AAL-SAP, to command the SSCS to send the flow control ON request or the flow control OFF request, depending whether the flow control is to be activated or deactivated. Alternatively, the flow control information may be added to the user data prior to inputting the user data to the AAL layer in which case the user information will be inherently packed into the AAL-SDU. The AAL-SDU is transported through the AAL lower layers and the ATM layer to the other end of the ATM connection (e.g. from the RNC to the MSC or vice versa) as specified in the ATM specifications. The receiving AAL-SAP user or the SSCS sub-layer extracts the flow control information from the received AAL-SDU. The received flow control information is used to implement the flow control. This may include mapping or converting the flow control information into the flow control request according to the previous leg (e.g. the MS-RNC or the MSC-fixed network) in order to activate or deactivate the flow control towards the previous leg. The implementation of the flow control may also include adapting the AAL-SAP user's own operations to the status of the flow control indicated by the received flow control information, e.g. stopping the sending of new data if the flow control request indicates that the flow control is active (ON), and restarting the sending of new data if the flow control request indicates that the flow control is deactivated (OFF).

There are several alternative ways for packing the flow control information into the AAL-SDU.
1) An octet carrying the flow control request (ON or OFF) is always inserted in the AAL-SDU, for example before the first user data octet. A receiving entity will always know that the first payload octet contains flow control information (and perhaps some other status/control information). This is applicable to all AAL types, i.e. AAL1, AAL2 and AAL5.
2) A bit or bits carrying the flow control request (ON or OFF) is/are always inserted in the AAL-SDU, for example before the first user data bits. The receiving entity will always know that the first payload bit(s) contain(s) flow control information (and perhaps some other non-user-data information). This is applicable to AAL type 1 operating in the non-structured mode, for example.
3) An octet or (a) bit(s) carrying the flow control information (and/or other status/control information) is inserted in the AAL-SDU as the only payload information, or with only a limited amount of user data in the payload, in order to make the whole payload fit in one or a limited number of ATM cells. In this way the flow control (and/or status/control) information must not be presented in all AAL-SDUs, but the flow control request is transmitted only when required. The AAL-SDUs carrying the flow control information is in a normal manner provided with a length indication, e.g. a length indicator in the AAL2 and AAL5, or a sequence number in the AAL1. The receiver is able to identify the AAL-SDUs carrying the flow control information by means of this length indication. A short AAL-SDU is carrying flow control and/or status/control information, whereas longer AAL-SDUs are carrying pure user data. This method is applicable to all AAL types.

In the octet based transmission (e.g. AAL5, AAL2) a whole octet is used to carry the flow control (and/or status/control) information, which means that the information can be protected by an error correcting code. This is useful in a service, such as AAL5, which allows corrupted SDUs to be delivered to the service user.

In one embodiment of the invention the user or control plane has access to the ATM layer. The flow control information is transmitted from/to the user or control plane to/from the ATM layer with interlayer primitives or messages. The ATM layer transports the flow control information to the peer ATM layer in an ATM cell. In addition to the flow control information, the cell will carry a connection identifier and cell or payload type identifier in order to enable the receiving ATM entity to deliver the information to the correct user or control entity.

There are several ways how an ATM cell can carry the required information, for example:
- The payload type of an ATM cell is given a dedicated value, e.g. "Connection related information" or "Flow control information". The VPI and VCI fields of the cell are used for the connection identifier (as usual in the ATM. The information field of the cell is used for carrying additional information, e.g. Flow Control ON, Flow Control OFF.
- The payload type of an ATM cell is given a value "user data". The VPI and VCI fields of the cell are given a dedicated value, e.g. "Connection related information" or "Flow control information" or "Signalling information". The information field of the cell is used for carrying the connection identification and additional information, e.g. Flow Control ON, Flow Control OFF.

According to the second aspect of the invention, the flow control information is tunnelled over the ATM leg in out-channel signalling, i.e. using a control plane message.

The user plane protocol entity in the RNC, i.e. MAC/RLC user entity, or in the MSC, i.e. a fixed network protocol user entity, or in the IWU, i.e. a GSM protocol user entity, recognizes the need for flow control towards the ATM leg of the connection. The recognition may be based on the buffer status or the flow control information received, for example. The user plane protocol entity then indicates the need of the flow control to the call control and signalling entity in the control plane, e.g. by sending a "flow control required in this connection" message with parameters identifying the connection or channel in question.

The control plane sends the flow control request in an out-of-band signalling message associated with the connection to the peer signalling entity behind the ATM connection. In other words, the RNC sends a message to the MSC or the IWU, and the MSC or the IWU sends a message to the RNC. The type or format of the message depends on the signalling system used.

If the ATM user-to-network interface signalling (UNI) is employed, a connection related STATUS message can be used, for example. Only new status parameters values, such as "flow control ON" and "flow control OFF", are defined in the STATUS message. The UNI is defined in the ITU-T Q.2931 which also defines the STATUS message. There are unused parameters values in the STATUS message according to the Q.2931 which can be used for the purpose of the invention.

If the ATM network to network interface signalling (NNI) according to the recommendation ITU-T Q.2763 is used, the user to user signalling (UUS) message, for example, can be used for carrying the flow control information according to the invention.

If another kind of signalling, such as RAN-MAP, is used, a corresponding connection associated message can be employed to transport a flow control ON/OFF request to the peer signalling or call control entity. Because the RAN-MAP is currently under specification, it is easy to specify flow control parameters for a message or even a dedicated message for this purpose. The receiving signalling and call control entity extracts the flow control request from the received signalling message and forwards it to the relevant user plane control entity. The user plane control entity employs the flow control request for implementation of the flow control. For example, the user plane control entity may map the flow control request to the flow control mechanism of the protocol of the previous traffic channel leg, e.g. to the MAC/RLC in the RNC, or to the GSMRLP or GSMRA in the IWU, or to the ISDN V.120 in the MSC, in order to thereby activate or deactivate the flow control towards the previous leg.

The invention was described above in embodiments using circuit-switched connections. However, the invention can also be applied in conjunction with packet data services.

The invention should not be limited to the specific examples described herein. Rather, the scope of the invention should be construed in accordance with the claims attached hereto.

## Claims

1. , A data transmission method in a telecommunications system, comprising
transmitting data over a connection comprising a first leg supporting flow control on a lower transmission protocol level underlying a user level, an intermediate second leg (Iu), and a third leg supporting flow control on the lower transmission protocol level,
**characterized by**
tunnelling lower level flow control information transparently over the lower transmission protocol level of the second leg not supporting flow control on the lower transmission level between said first and third legs in order to provide end-to-end flow control and thereby data integrity over the connection on the lower transmission protocol layer.

2. The method as claimed in claim 1, **characterized by**
tunnelling said flow control Information as in-channel signalling over the second leg (Iu).

3. The method as claimed in claim 1 or 2, **characterized in that** said second leg (Iu) is an ATM connection, and that said lower transmission protocol level includes an ATM adaptation layer.

4. The method as claimed in claim 3, **characterized by**
encapsulating the flow control information in an ATM adaptation layer service data unit,
transporting the ATM adaptation layer service data unit to the other end of the second leg (Iu) in accordance with an ATM network protocol,
extracting the flow control information from the ATM adaptation layer service data unit at said other end of the second leg (Iu).

5. The method as claimed in claim 3 or 4, **characterized by** inserting the flow control information in the ATM adaptation layer service data unit in one of the following ways:
inserting an octet carrying the flow control information before a first user data octet in a payload field of the ATM adaptation layer service data unit,
inserting a bit or bits carrying the flow control information before first user data bits in a payload field of the ATM adaptation layer service data unit,
inserting an octet or a bit or bits carrying the flow control information in the ATM adaptation layer service data unit as the only payload information in the payload field, or
inserting an octet or a bit or bits carrying the flow control information with a limited amount of user data in the payload of the ATM adaptation layer service data unit.

6. The method as claimed in claim 1, 2 or 3, **characterized by**
said second leg (Iu) being an ATM connection
tunnelling said flow control information in ATM cells in an ATM layer over the ATM connection (Iu).

7. The method as claimed in claim 1 or 3, **characterized by**
tunnelling said flow control information over the second leg (Iu) in an out-of-traffic-channel signalling associated with a connection.

8. The method as claimed in any one of claims 1-7, **characterized by** said tunnelling comprising
recognizing at a first node (IWU, RNC) between the first and second legs a need to start a flow control towards the second leg (Iu).
sending a flow control ON request over the second leg (Iu).
receiving the flow control ON request at a second node (RNC, IWU) between the second and third legs,
stopping sending new data or decreasing data rate from the second node (RNC, IWU) to the first node (IWU, RNC) over the second leg (Iu) in response to the flow control ON request.

9. The method as claimed in claim 8, **characterized by** said tunnelling comprising
recognizing at the first node (IWU, RNC) a need of stopping the flow control towards the second leg (Iu).
sending a flow control OFF request over the second leg (Iu),
receiving the flow control OFF request at the second node (RNC, IWU);
starting sending new data or increasing data rate from the second node (RNC, IWU) to the first (IWU, RNC) over the second leg (Iu) in response to said flow control off request.

10. The method as claimed in any one of claims 1-7, **characterized by** said tunnelling comprising
recognizing at a first node (IWU, RNC) between the first and second legs a need to start flow control towards the second leg (Iu),
sending a flow control ON request over the second leg (Iu),
receiving the flow control ON request at a second node (RNC, IWU) between the second and third legs,
activating in the second node (RNC, IWU) flow control towards the third leg in response to the flow control ON request.

11. The method as claimed in any one of claims 1-8, **characterized by** said tunnelling comprising
recognizing at the first node (IWU, RNC) a need of stopping the flow control towards the second leg (Iu),
sending a flow control OFF request over the second leg (Iu),
receiving the flow control OFF request at the second node (RNC, IWU),
deactivating in the second node (RNC, IWU) flow control towards the third leg in response to the flow control ON request.

12. The method according to any one of claims 1-7, **characterized by**
recognizing the need for starting or stopping the flow control being based on the status of a receiving or transmitting buffer in a first node (IWU, RNC) or on incoming flow control information received over the first leg.

13. A telecommunications system, comprising
a first connection leg supporting flow control on a lower transmission protocol level underlying a user level,
an intermediate second connection leg (Iu),
a third connection leg supporting flow control on the lower transmission protocol level,
a first node (IWU, RNC) between the first and second legs,
a second node (RNC, IWU) between the second and third legs,
**characterized in that** said second leg (Iu) does not support flow control on the lower transmission level, and that the first and second nodes (IWU, RNC) are arranged to tunnel lower level flow control information transparently over the lower transmission protocol level of the second leg (Iu) between said first and third legs in order to provide end-to-end flow control and thereby data Integrity over the connection on the lower transmission protocol layer.

14. The system as claimed In claim 13, **characterized in that** the first and second nodes (IWU,RNC) are arranged to tunnel said flow control Information in in-channel signalling over the second leg (Iu).

15. The system as claimed in claim 13 or 14, **characterized in that** said second leg (Iu) is an ATM connection, and that said lower transmission protocol level includes an ATM adaptation layer.

16. The system as claimed in claim 15, **characterized in that** said first and second nodes (IWU, RNC) are arranged to insert the flow control information in an ATM adaptation layer service data unit.

17. The system as claimed in claim 14 or 15, **characterized in that** said second leg (Iu) is an ATM connection, and that said first and second nodes (IWU, RNC) are arranged to tunnel the flow control information in ATM cells in an ATM layer over the ATM connection.

18. The system as claimed in any one of claims 13 or 15, **characterized in that** the first and second nodes (IWU, RNC) are arranged to tunnel said flow control information in out of traffic-channel signalling over the second leg (Iu).

19. The system as claimed in any one of claims 13-18, **characterized in that** the first and second nodes (IWU, RNC) are arranged to recognize a need to start or stop flow control towards the second leg (Iu) and to send a flow control ON request or a flow control OFF request, respectively, over the second leg (Iu), and the first and second nodes (IWU, RNC) are responsive to receiving the flow control ON request or the flow control OFF request for stopping or starting, respectively, the sending, or decreasing and increasing data rate, respectively, of data towards the second leg (Iu).

20. The system as claimed in any one of claims 13-18, **characterized in that** the first and second nodes (IWU, RNC) are arranged to recognize a need to start or stop flow control towards the second leg (Iu) and to send a flow control ON request or a flow control OFF request, respectively, over the second leg (Iu), and the first and second nodes (IWU, RNC) are responsive to receiving the flow control ON request or the flow control OFF request for activating or deactivating, respectively, flow control towards the first or the third leg.

21. The system as claimed in any one of claims 13-20, **characterized in that** the first and second nodes (IWU,RNC) are arranged to recognize a need for starting or stopping the flow control based on the status of a receiving or transmitting buffer in the nodes (IWU, RNC) or on incoming flow control information received over the first or the third leg.

22. The system as claimed in any one of claims 13-21, **characterized in that** the system is a mobile communications system, and that the first and second nodes are network elements (IWU,RNC) of the mobile communication system, and that the first leg is at the air interface between a mobile station (MS) and one (RNC) of said network elements.

23. A network node for a telecommunications system, the network node (IWU,RNC) being arranged to relay communication between a first connection leg supporting flow control on a lower transmission protocol level underlying a user level a first connection leg, and an intermediate second connection leg (Iu) connected a second network node (RNC,IWU) relaying the communication further to and from a third connection leg supporting flow control on the lower transmission protocol level, **characterized in that** the second leg (Iu) does not support flow control on the lower transmission level, and that the network node (IWU,RNC) is arranged to tunnel lower level flow control information transparently over the lower transmission protocol level of the second leg (Iu) between said first and third legs in order to provide end-to-end flow control and thereby data integrity over the connection on the lower transmission protocol layer.

24. A network node as claimed in claim 23, **characterized in that** the node (IWU,RNC) is arranged to tunnel said flow control information in in-channel signalling over the second leg (Iu).

25. A network node as claimed in claim 23 or 14, **characterized in that** said second leg (Iu) is an ATM connection, and that said lower transmission protocol level includes an ATM adaptation layer.

26. A network node as claimed in claim 25, **characterized in that** the node (IWU,RNC) arranged to insert the flow control information in an ATM adaptation layer service data unit.

27. A network node as claimed in claim 24, **characterized in that** said second leg (Iu) is an ATM connection, and that the node (IWU,RNC) is arranged to tunnel the flow control information in ATM cells in an ATM layer over the ATM connection.

28. A network node as claimed in any one of claims 23 or 25, **characterized in that** the node (IWU,RNC) is arranged to tunnel said flow control information in out-of-traffic-channel signalling over the second leg (lu).

29. A network node as claimed in any one of claims 23-28, **characterized in that** the node (IWU,RNC) is arranged to recognize a need to start or stop flow control towards the second leg (Iu) and to send a flow control ON request or a flow control OFF request, respectively, over the second leg (Iu), and the node (IWU,RNC) is responsive to receiving a flow control ON request or a flow control OFF request for stopping or starting, respectively, the sending, or decreasing and increasing data rate, respectively, of data towards the second leg (Iu),

30. A network node as claimed in any one of claims 23-28, **characterized in that** the node (IWU,RNC) is arranged to recognize a need to start or stop flow control towards the second leg (Iu) and to send a flow control ON request or a flow control OFF request, respectively, over the second leg (Iu), and the node (IWU,RNC) is responsive to receiving a flow control ON request or a flow control OFF request for activating or deactivating, respectively, flow control towards the first or the third leg.

31. A network node as claimed in any one of claims 23-28, **characterized in that** the node is arranged to recognize a need for starting or stopping the flow control based on the status of a receiving or transmitting buffer or an incoming flow control information received over the first or the third leg.

32. A network node as claimed in any one of claims 23-31, **characterized in that** the system is a mobile communications system, and that the node is a network element (IWU, RNC) of the mobile communications system.

33. A network node as claimed in claim 32, **characterized in that** the first leg is at the air interface between a mobile station (MS) and the network element (RNC)

34. A network node as claimed in claim 32 or 33, **characterized in that** the network node is a radio network controller (RNC).

35. A network node as claimed in claim 32, **characterized in that** the network node is an interworking unit (IWU).

## Patentansprüche

1. Daten-Übertragungsverfahren in einem Telekommunikations-System, aufweisend Übertragen von Daten über eine Verbindung, die einen ersten Zweig aufweist, der eine Flusssteuerung auf einem unteren Übertragungs-Protokoll-Level unterstützt, welcher unter einem Nutzer-Level liegt, einen zwischenliegenden zweiten Zweig (Iu), und einen dritten Zweig, der eine Flusssteuerung auf dem unteren Übertragungs-Protokoll-Level unterstützt, **gekennzeichnet durch**
Tunneln von unterer Level-Flusssteuer-Information in transparenter Weise über den unteren Übertragungs-Protokoll-Level des zweiten Zweigs, der keine Flusssteuerung auf dem unteren Übertragungs-Level unterstützt, zwischen dem ersten und dem dritten Zweig, um eine End-Zu-End-Flusssteuerung zu liefern und **dadurch** Daten-Integrität über die Verbindung auf der unteren Übertragungs-Protokoll-Schicht zu liefern.

2. Verfahren wie in Anspruch 1 beansprucht, **gekennzeichnet durch** Tunneln der Flusssteuer-Information als eine In-Kanal-Mitteilung über den zweiten Zweig (Iu).

3. Verfahren nach Anspruch 1 oder 2, **dadurch gekennzeichnet, dass** der zweite Zweig (Iu) eine ATM-Verbindung ist, und dass der untere Übertragongs-Protokoll-Level eine ATM-Anpassungsschicht aufweist.

4. Verfahren nach Anspruch 3, **gekennzeichnet durch**
Verkapseln der Flusssteuer-Information in einer Dateneinheit für einen ATM-Anpassungsschicht-Dienst,
Transportieren der Dateneinheit des ATM-Anpassungsschicht-Dienstes an das andere Ende des zweiten Zweig (Iu) gemäß einem ATM-Netzwerkprotokoll,
Extrahieren der Flusssteuer-Information von der Dateneinheit für den ATM-Anpassungsschicht-Dienst an dem anderen Ende des zweiten Zweigs (Iu).

5. Verfahren nach Anspruch 3 oder 4, **gekennzeichnet durch** Einsetzen der Flusssteuer-Information in die Dateneinheit des ATM-Anpassungsschicht-Dienstes auf eine der folgenden Weisen:
Einsetzen eines Oktetts, das die Flusssteuer-Information trägt vor einem ersten Nutzerdaten-Oktett in einem Payload-Feld der Dateneinheit für den ATM-Anpassungsschicht-Dienst,
Einsetzen eines Bit oder Bits, die die Flusssteuer-Information tragen, vor den ersten NutzerDaten-Bits in einem Payload-Feld der Dateneinheit für den ATM-Anpassungsschicht-Dienst,
Einsetzen eines Oktetts oder Bit oder Bits, die die Flusssteuer-Information tragen, in der Dateneinheit für den ATM-Anpassungsschicht-Dienst als die einzige Payload-Information in dem Payload-Feld oder
Einsetzen eines Oktetts oder Bit oder von Bits, die die Flusssteuer-Information tragen, mit einer beschränkten Menge von Nutzerdaten in dem Payload der Dateneinheit für den ATM-Anpassungsschicht-Dienst.

6. Verfahren nach Anspruch 1, 2 oder 3, **gekennzeichnet dadurch, dass** der zweite Zweig (Iu) eine ATM-Verbindung ist und Tunneln der Flusssteuer-Information der ATM-Zellen in einer ATM-Schicht über die ATM-Verbindung.

7. Verfahren nach Anspruch 1 oder 3, **gekennzeichnet durch** Tunneln der Flusssteuer-Information über den zweiten Zweig (Iu) in einer Außerhalb-des-Verkehrs-Kanal-Mitteilung, die mit einer Verbindung verknüpft ist.

8. Verfahren nach einem der Ansprüche 1 bis 7, **dadurch gekennzeichnet, dass** das Tunneln aufweist
Erkennen an einem ersten Knoten (RNC, IWU) zwischen dem ersten und dem zweiten Zweig eines Bedarfs, eine Flusssteuerung zu dem zweiten Zweig (Iu) zu starten;
Senden einer Flusssteuerung-AN-Anforderung über den zweiten Zweig (Iu),
Empfangen der Flusssteuerung-AN-Anforderung an dem zweiten Knoten (RNC, IWU) zwischen dem zweiten und dem dritten Zweig,
Stoppen des Sendens von neuen Daten oder Vermindern der Datenraten von dem zweiten Knoten (RNC, IWU) zu dem ersten Knoten (IWU, RNC) über den zweiten Zweig (Iu) in Reaktion auf die Flusssteuerung-AN-Anforderung.

9. Verfahren nach Anspruch 8, **dadurch gekennzeichnet, dass** das Tunneln aufweist:
Erkennen an dem ersten Knoten (IWU, RNC) eines Bedarfs, die Flusssteuerung zu dem zweiten Zweig (Iu) zu stoppen,
Senden einer Flusssteuerung-AUS-Anforderung über den zweiten Zweig (Iu),
Empfangen der Flusssteuerung-AUS-Anforderung an dem zweiten Knoten (RNC, IWU),
Starten des Sendens von neuen Daten oder Erhöhen der Datenrate von dem zweiten Knoten (RNC, IWU) zu dem ersten (IWU, RNC) über den zweiten Zweig (Iu) in Reaktion auf die
Flusssteuerung-AUS-Anforderung.

10. Verfahren nach einem der Ansprüche 1 bis 7, **dadurch gekennzeichnet, dass** das Tunneln aufweist:
Erkennen an einem ersten Knoten (IWU, RNC) zwischen dem ersten und zweiten Zweig eines Bedarfs, die Flusssteuerung zu dem zweiten Zweig (Iu) zu starten,
Senden einer Flusssteuerung-AN-Anforderung über den zweiten Zweig (Iu)
Empfangen der Flusssteuerung-AN-Anforderung an einem zweiten Knoten (RNC, IWU) zwischen dem zweiten und dem dritten Zweig,
Aktivieren in dem zweiten Knoten (RNC, IWU) einer Flusssteuerung zu dem dritten Zweig in Reaktion auf die Flusssteuerung-AN-Anforderung.

11. Verfahren nach einem der Ansprüche 1 bis 8, **dadurch gekennzeichnet, dass** das Tunneln aufweist:
Erkennen an dem ersten Knoten (IWU, RNC) eines Bedarfs, die Flusssteuerung zu dem zweiten Zweig (Iu) zu stoppen,
Senden einer Flusssteuerung-AUS-Anforderung über den zweiten Zweig (Iu),
Empfangen der Flusssteuerung-AUS-Anforderung an dem zweiten Knoten (RNC, IWU),
Deaktivieren in dem zweiten Knoten (RNC, IWU) einer Flusssteuerung zu dem dritten Zweig in Reaktion auf die Flusssteuerung-AN-Anforderung.

12. Verfahren nach einem der Ansprüche 1 bis 7, **gekennzeichnet durch**
Erkennen, dass der Bedarf zum Starten oder Stoppen der Flusssteuerung auf dem Status eines Empfangs- oder Sendepuffers in einem ersten Knoten (IWU, RNC) beruht oder auf einer eingehenden Flusssteuer-Information, die über den ersten Zweig erhalten wird.

13. Telekommunikations-System, aufweisend
einen ersten Verbindungszweig, der Flusssteuerung auf einem unteren Übertragungs-Protokoll-Level unterstützt, der unter einem Nutzer-Level liegt,
einen zwischenliegenden zweiten Verbindungszweig (Iu),
einen dritten Verbindungszweig, der Flusssteuerung auf dem unteren Übertragungs-Protokoll-Level unterstützt,
einen ersten Knoten (IWU, RNC) zwischen dem ersten und dem zweiten Zweig,
einen zweiten Knoten (RNC, IWU) zwischen dem zweiten und dem dritten Zweig,
**dadurch gekennzeichnet, dass** der zweite Zweig (Iu) keine Flusssteuerung auf dem unteren Übertragungs-Level unterstützt und dass der erste und zweite Knoten (IWU, RNC) angeordnet sind, um untere Level-Flusssteuer-Information transparent über den unteren Übertragungs-Protokoll-Level auf dem zweiten Zweig (Iu) zwischen dem ersten und dem dritten Zweig zu tunneln, um eine Ende-an-Ende-Flusssteuerung und **dadurch** eine Datenintegrität über die Verbindung auf der unteren Übertragungs-Protokoll-Schicht zu liefern.

14. System nach Anspruch 13, **dadurch gekennzeichnet, dass** der erste und zweite Knoten (IWU, RNC) angeordnet sind, die Flusssteuer-Information in einer In-Kanal-Mitteilung über den zweiten Zweig (Iu) zu tunneln.

15. System nach Anspruch 13 oder 14, **dadurch gekennzeichnet, dass** der zweite Zweig (Iu) eine ATM-Verbindung ist und dass der untere Übertragungs-Protokoll-Level eine ATM-Anpassungsschicht aufweist.

16. System nach Anspruch 15, **dadurch gekennzeichnet, dass** der erste und zweite Knoten (IWU, RCN) angeordnet sind, um die Flusssteuer-Information in einer ATM-Anpassungsschicht-Dienst-Dateneinheit einzufügen.

17. System nach Anspruch 14 oder 15, **dadurch gekennzeichnet, dass** der zweite Zweig (Iu) eine ATM-Verbindung ist, und dass der erste und zweite Knoten (IWU, RNC) angeordnet sind, um die Flusssteuer-Information in ATM-Zellen in einer ATM-Schicht über die ATM-Verbindung zu tunneln.

18. System nach einem der Ansprüche 13 oder 15, **dadurch gekennzeichnet, dass** der erste und zweite Knoten (IWU, RNC) angeordnet sind, die Flusssteuer-Information in einer Außer-Kanal-Mitteilung über den zweiten Zweig (Iu) zu tunneln.

19. System nach einem der Ansprüche 13 bis 18, **dadurch gekennzeichnet, dass** der erste und zweite Knoten (IWU, RNC) angeordnet sind, einen Bedarf zu erkennen, die Flusssteuerung zu dem zweiten Zweig (Iu) zu starten oder zu stoppen und eine Flusssteuerung-AN-Anforderung bzw. eine Flusssteuerung-AUS-Anforderung über den zweiten Zweig (Iu) zu senden, und wobei der erste und zweite Knoten (IWU, RNC) darauf reagieren, die Flusssteuerung-AN-Anforderung bzw. die Flusssteuerung-AUS-Anforderung zu erhalten, zum Stoppen bzw. Starten des Sendens oder Verringern bzw. Erhöhen der Datenrate von Daten zu dem zweiten Zweig (Iu).

20. System nach einem der Ansprüche 13 bis 18, **dadurch gekennzeichnet, dass** der erste und zweite Knoten (IWU, RNC) angeordnet sind, einen Bedarf zu erkennen, die Flusssteuerung für den zweiten Zweig (Iu) zu starten oder zu stoppen und um eine Flusssteuerung-AN-Anforderung bzw. eine Flusssteuerung-AUS-Anforderung über den zweiten Zweig (Iu) zu senden, und wobei der erste und zweite Knoten (IWU, RNC) darauf reagieren, die Flusssteuerung-AN-Anforderung oder die Flusssteuerung-AUS-Anforderung zum Aktivieren bzw. Deaktivieren der Flusssteuerung zu dem ersten oder dritten Zweig zu erhalten.

21. System nach einem der Ansprüche 13 bis 20, **dadurch gekennzeichnet, dass** der erste und zweite Knoten (IWU, RNC) angeordnet sind, einen Bedarf zum Starten oder Stoppen der Flusssteuerung zu erkennen, und zwar beruhend auf dem Status eines Empfangs- oder Sendepuffers in dem Knoten (IWU, RNC), oder einer eingehenden Flusssteuer-Information, die empfangen wird über den ersten oder den dritten Zweig.

22. System nach einem der Ansprüche 13 bis 21, **dadurch gekennzeichnet, dass** das System ein mobiles Kommunikationssystem ist, und dass der erste und zweite Knoten Netzwerkelemente (IWU, RNC) des mobilen Kommunikationssystems sind, und dass der erste Zweig die Luft-Schnittstelle zwischen einer Mobilstation (MS) und einem (RNC) der Netzwerkelemente ist.

23. Netzwerkknoten für ein Telekommunikationssystem, wobei der Netzwerkknoten (IWU, RNC) angeordnet ist, um Kommunikation zwischen einem ersten Verbindungszweig, der die Flusssteuerung auf einem unteren Übertragungs-Protokoll-Level unterstützt, der unterhalb eines Nutzer-Levels liegt, eines ersten Verbindungszweigs und eines zwischenliegenden zweiten Verbindungszweigs (Iu), der mit einem zweiten Netzwerkknoten (RNC, IWU) verbunden ist, welcher die Kommunikation weiter an und von einem dritten Verbindungszweig verbindet, welcher die Flusssteuerung auf dem unteren Übertragungs-Protokoll-Level unterstützt, **dadurch gekennzeichnet, dass** der zweite Zweig (Iu) die Flusssteuerung auf dem unteren Übertragungs-Level nicht unterstützt und dass der Netzwerkknoten (IWU, RNC) angeordnet ist, um Flusssteuer-Information des unteren Levels transparent über den unteren Übertragungs-Protokoll-Level des zweiten Zweigs (Iu) zwischen dem ersten und dem dritten Zweig zu tunneln, um Ende-an-Ende Flusssteuerung und **dadurch** Datenintegrität über die Verbindung auf der unteren Übertragungs-Protokoll-Schicht bereit zu stellen.

24. Netzwerkknoten nach Anspruch 23, **dadurch gekennzeichnet, dass** der Knoten (IWU, RNC) angeordnet ist, um die Flusssteuer-Information in einer In-Kanal-Mitteilung über den zweiten Zweig (Iu) zu tunneln.

25. Netzwerkknoten nach Anspruch 23 oder 14, **dadurch gekennzeichnet, dass** der zweite Zweig (Iu) eine ATM-Verbindung ist, und dass der untere Übertragungs-Protokoll-Level eine ATM-Anpassungsschicht aufweist.

26. Netzwerkknoten nach Anspruch 25, **dadurch gekennzeichnet, dass** der Knoten (IWU, RNC) angeordnet ist, die Flusssteuer-Information in einer ATM-Anpassungsschicht-Dienst-Dateneinheit einzufügen.

27. Netzwerkknoten nach Anspruch 24, **dadurch gekennzeichnet, dass** der zweiten Zweig (Iu) eine ATM-Verbindung ist, und der Knoten (IWU, RNC) angeordnet ist, die Flusssteuer-Information in ATM-Zellen in einer ATM-Schicht über die ATM-Verbindung zu tunneln.

28. Netzwerkknoten nach einem der Ansprüche 23 oder 25, **dadurch gekennzeichnet, dass** der Knoten (IWU, RNC) angeordnet ist, die Flusssteuer-Information in einer Außer-Kanal-Mitteilung über den zweiten Zweig (Iu) zu tunneln.

29. Netzwerkknoten nach einem der Ansprüche 23 bis 28, **dadurch gekennzeichnet, dass** der Knoten (IWU, RNC) angeordnet ist, einen Bedarf zu erkennen, die Flusssteuerung zu dem zweiten Zweig (Iu) zu starten oder zu stoppen und eine Flusssteuerung-AN-Anforderung bzw. eine Flusssteuerung-AUS-Anforderung zu starten oder zu stoppen, und zwar über den zweiten Zweig (Iu), und wobei der Knoten (IWU, RNC) auf den Empfang einer Flusssteuerung-AN-Anforderung oder einer Flusssteuerung-AUS-Anforderung antwortet, um das Senden oder Verringern bzw. Erhöhen der Datenrate der Daten zu dem zweiten Zweig (Iu) zu stoppen oder zu starten.

30. Netzwerkknoten nach einem der Ansprüche 23 bis 28, **dadurch gekennzeichnet, dass** der Knoten (IWU, RNC) angeordnet ist, einen Bedarf zu erkennen, die Flusssteuerung für den zweiten Zweig (Iu) zu starten oder zu stoppen und um eine Flusssteuerung-AN-Anforderung bzw. eine Flusssteuerung-AUS-Anforderung über den zweiten Zweig (Iu) zu senden, und wobei der Knoten (IWU, RNC) darauf antwortet, eine Flusssteuerung-AN-Anforderung oder eine Flusssteuerung-AUS-Anforderung zum Aktivieren oder Deaktivieren der Flusssteuerung zu dem ersten oder dritten Zweig zu erhalten.

31. Netzwerkknoten nach einem der Ansprüche 23 bis 28, **dadurch gekennzeichnet, dass** der Knoten angeordnet ist, einen Bedarf zu erkennen zum Starten oder Stoppen der Flusssteuerung, die auf dem Status eines Empfangs- oder Sendepuffers oder einer eingehenden Flusssteuer-Information beruht, die empfangen ist über den ersten oder den dritten Zweig.

32. Netzwerkknoten nach einem der Ansprüche 23 bis 31, **dadurch gekennzeichnet, dass** das System ein mobiles Kommunikationssystem ist, und dass der Knoten ein Netzwerkknoten (IWU, RNC) des mobilen Kommunikationssystems ist.

33. Netzwerkknoten nach Anspruch 32, **dadurch gekennzeichnet, dass** der erste Zweig sich bei der Luft-Schnittstelle zwischen einer Mobilstation (MS) und dem Netzwerkelement (RNC) befindet.

34. Netzwerkknoten nach Anspruch 32 oder 33, **dadurch gekennzeichnet, dass** der Netzwerkknoten ein Funknetzwerk-Steuergerät (RNC) ist.

35. Netzwerkknoten nach Anspruch 32, **dadurch gekennzeichnet, dass** der Netzwerkknoten eine Zwischenarbeits-Einheit (IWU) ist.

## Revendications

1. Procédé de transmission de données dans un système de télécommunications, comprenant
une émission de données sur une connexion comprenant une première branche supportant un contrôle de flux sur un niveau de protocole de transmission inférieur sous-jacent à un niveau utilisateur, une deuxième branche intermédiaire (Iu) ne supportant pas un contrôle de flux sur le niveau de transmission inférieur, et une troisième branche supportant un contrôle de flux sur le niveau de protocole de transmission inférieur,
**caractérisé par**
une tunellisation d'informations de contrôle de flux de niveau inférieur de manière transparente sur le niveau de protocole de transmission inférieur de la deuxième branche (Iu) ne supportant pas un contrôle de flux sur le niveau de transmission inférieur, entre lesdites première et troisième branches, afin d'assurer un contrôle de flux de bout en bout et, ainsi, une intégrité des données sur la connexion sur la couche de protocole de transmission inférieur.

2. Procédé selon la revendication 1, **caractérisé par** la tunnellisation desdites informations de contrôle comme une signalisation de canaux sur la deuxième branche (Iu).

3. Procédé selon la revendication 1 ou 2, **caractérisé en ce que** ladite deuxième branche (Iu) est une connexion d'ATM, et **en ce que** ledit niveau de protocole de transmission inférieur comprend une couche d'adaptation d'ATM.

4. Procédé selon la revendication 3, **caractérisé par**
l'encapsulation des informations de contrôle de flux dans une unité de données de service de couche d'adaptation d'ATM,
le transport de l'unité de données de service de couche d'adaptation d'ATM vers l'autre extrémité de la deuxième branche (Iu), selon un protocole de réseau d'ATM,
l'extraction des informations de contrôle de flux à partir de l'unité de données de service de couche d'adaptation d'ATM au niveau de ladite autre extrémité de la deuxième branche (Iu).

5. Procédé selon la revendication 3 ou 4, **caractérisé par** l'insertion des informations de contrôle de flux dans l'unité de données de service de couche d'adaptation d'ATM de l'une des manières suivantes :
en insérant un octet acheminant les informations de contrôle de flux avant un premier octet de données utilisateur dans un champ de charge utile de l'unité de données de service de couche d'adaptation d'ATM,
en insérant un bit ou des bits acheminant les informations de contrôle de flux avant les premiers bits de données utilisateur dans un champ de charge utile de l'unité de données de service de couche d'adaptation d'ATM,
en insérant un octet ou un bit ou des bits acheminant les informations de contrôle de flux dans l'unité de données de service de couche d'adaptation d'ATM en tant que seules informations de charge utile dans le champ de charge utile, ou
en insérant un octet ou un bit ou des bits acheminant les informations de contrôle de flux avec une quantité limitée de données utilisateur dans la charge utile de l'unité de données de service de couche d'adaptation d'ATM.

6. Procédé selon la revendication 1, 2 ou 3, **caractérisé par**
ladite deuxième branche (Iu) étant une connexion d'ATM tunnellisant lesdites informations de contrôle de flux dans des cellules d'ATM dans une couche d'ATM sur la connexion d'ATM (Iu).

7. Procédé selon la revendication 1 ou 3, **caractérisé par**
la tunnellisation desdites informations de contrôle de flux sur la deuxième branche (Iu) dans le cadre d'une signalisation de canal situé en-dehors du trafic et associé à une connexion.

8. Procédé selon l'une quelconque des revendications 1 à 7, **caractérisé par** ladite tunnellisation comprenant
une reconnaissance, au niveau d'un premier noeud (RNC, IWU) situé entre la première et la deuxième branche, un besoin de lancer un contrôle de flux vers la deuxième branche (Iu),
un envoi d'une demande d'activation de contrôle de flux sur la deuxième branche (Iu),
une réception de la demande d'activation de contrôle de flux au niveau d'un second noeud (RNC, IWO) situé entre la deuxième et la troisième branches,
un arrêt de l'envoi de nouvelles données ou diminuer le débit des données entre le second noeud (RNC, IWO) et le premier noeud (IWU, RNC) sur la deuxième branche (Iu) en réponse à la demande d'activation de contrôle de flux.

9. Procédé selon la revendication 8, **caractérisé par** ladite tunnellisation comprenant
une reconnaissance, au niveau du premier noeud (IWU, RNC), un besoin d'arrêter le contrôle de flux vers la deuxième branche (Iu),
un envoi d'une demande d'arrêt de contrôle de flux sur la deuxième branche (Iu),
une réception de la demande d'arrêt de contrôle de flux au niveau du second noeud (RNC, IWO),
un commencement de l'envoi de nouvelles données ou augmenter le débit des données entre le second noeud (RNC, IWO) et le premier noeud (IWU, RNC) sur la deuxième branche (Iu) en réponse à ladite demande d'arrêt de contrôle de flux.

10. Procédé selon l'une quelconque des revendications 1 à 7, **caractérisé par** ladite tunnellisation comprenant
une reconnaissance, au niveau d'un premier noeud (IWU, RNC) situé entre la première et la deuxième branche, un besoin de lancer un contrôle de flux vers la deuxième branche (Iu),
un envoi d'une demande d'activation de contrôle de flux sur la deuxième branche (Iu),
une réception de la demande d'activation de contrôle de flux au niveau d'un second noeud (RNC, IWO) situé entre la deuxième et la troisième branche,
une activation, dans le second noeud (RNC, IWO), d'un contrôle de flux vers la troisième branche en réponse à la demande d'activation de contrôle de flux.

11. Procédé selon l'une quelconque des revendications 1 à 8, **caractérisé par** ladite tunnellisation comprenant
une reconnaissance, au niveau du premier noeud (IWU, RNC), un besoin d'arrêter le contrôle de flux vers la deuxième branche,
un envoi d'une demande d'arrêt de contrôle de flux vers la deuxième branche (Iu),
une réception de la demande d'arrêt de contrôle de flux au niveau du second noeud (RNC, IWO),
une désactivation, dans le second noeud (RNC, IWO), du contrôle de flux vers la troisième branche en réponse à la demande d'activation de contrôle de flux.

12. Procédé selon l'une quelconque des revendications 1 à 7, **caractérisé par**
la reconnaissance du besoin de lancer ou d'arrêter le contrôle de flux sur la base du statut d'une mémoire tampon de réception ou de transmission dans un premier noeud (IWU, RNC), ou d'informations de contrôle de flux entrantes, reçues sur la première branche.

13. Système de télécommunications, comprenant
une première branche de connexion supportant un contrôle de flux sur un niveau de protocole de transmission inférieur sous-jacent à un niveau utilisateur,
une deuxième branche de connexion intermédiaire (Iu),
une troisième branche de connexion supportant un contrôle de flux sur le niveau de protocole de transmission inférieur,
un premier noeud (IWU, RNC) situé entre la première et la deuxième branche,
un second noeud (RNC, IWO) situé entre la deuxième et la troisième branche,
**caractérisé en ce que** ladite deuxième branche (Iu) ne supporte pas le contrôle de flux sur le niveau de transmission inférieur, et **en ce que** le premier et le second noeud (IWO, RNC) sont agencés afin de tunnelliser les informations de contrôle de flux de niveau inférieur de manière transparente sur le niveau de protocole de transmission inférieur de la deuxième branche (Iu) entre lesdites première et troisième branches afin d'assurer un contrôle de flux de bout en bout et, ainsi, une intégrité des données sur la connexion sur la couche de protocole de transmission inférieur.

14. Système selon la revendication 13, **caractérisé en ce que** le premier et le second noeud (IWO, RNC) sont agencés afin de tunnelliser lesdites informations de contrôle de flux dans le cadre d'une signalisation de canal sur la deuxième branche (Iu).

15. Système selon la revendication 13 ou 14, **caractérisé en ce que** ladite deuxième branche (Iu) est une connexion d'ATM, et **en ce que** ledit niveau de protocole de transmission inférieur comprend une couche d'adaptation d'ATM.

16. Système selon la revendication 15, **caractérisé en ce que** lesdits premier et second noeuds (IWO, RNC) sont agencés afin d'insérer les informations de contrôle de flux dans une unité de données de service de couche d'adaptation d'ATM.

17. Système selon la revendication 14 ou 15, **caractérisé en ce que** ladite deuxième branche (Iu) est une connexion d'ATM, et **en ce que** lesdits premier et second noeuds (IWO, RNC), sont agencés afin de tunnelliser les informations de contrôle de flux dans des cellules d'ATM dans une couche d'ATM sur la connexion d'ATM.

18. Système selon l'une quelconque des revendications 13 ou 15, **caractérisé en ce que** le premier et le second noeud (IWO, RNC) sont agencés afin de tunnelliser lesdites informations de contrôle de flux dans le cadre d'une signalisation de canal situé en-dehors du trafic sur la deuxième branche (Iu).

19. Système selon l'une quelconque des revendications 13 à 18, **caractérisé en ce que** le premier et le second noeud (RNC, IWO) sont agencés afin de reconnaître un besoin de lancer ou d'arrêter un contrôle de flux vers la deuxième branche (Iu) et d'envoyer une demande d'activation de contrôle de flux ou une demande d'arrêt de contrôle de flux, respectivement, sur la deuxième branche (Iu), et le premier et le second noeud (IWO, RNC) réagissent à la réception de la demande d'activation de contrôle de flux ou de la demande d'arrêt de contrôle de flux afin d'arrêter ou de lancer, respectivement, l'envoi ou la diminution et l'augmentation du débit des données, respectivement, vers la deuxième branche (Iu).

20. Système selon l'une quelconque des revendications 13 à 18, **caractérisé en ce que** le premier et le second noeud (IWO, RNC) sont agencés afin de reconnaître un besoin de lancer ou d'arrêter un contrôle de flux vers la deuxième branche (Iu), et d'envoyer une demande d'activation de contrôle de flux ou une demande d'arrêt de contrôle de flux, respectivement, sur la deuxième branche (Iu), et le premier et le second noeuds (IWO, RNC) réagissent à la réception de la demande d'activation de contrôle de flux ou de la demande d'arrêt de contrôle de flux afin d'activer ou de désactiver, respectivement, le contrôle de flux vers la première ou la troisième branche.

21. Système selon l'une quelconque des revendications 13 à 20, **caractérisé en ce que** le premier et le second noeud (IWO, RNC) sont agencés afin de reconnaître un besoin de lancer ou d'arrêter le contrôle de flux sur la base du statut d'une mémoire tampon de réception ou de transmission située dans les noeuds (IWO, RNC) ou d'informations de contrôle de flux entrantes, reçues sur la première ou la troisième branche.

22. Système selon l'une quelconque des revendications 13 à 21, **caractérisé en ce que** le système est un système de communication mobile, et **en ce que** le premier et le second noeud sont des éléments de réseau (IWO, RNC) du système de communication mobile, et **en ce que** la première branche se trouve au niveau de l'interface radio entre une station mobile (MS) et l'un (RNC) desdits éléments de réseau.

23. Noeud de réseau destiné à un système de télécommunications, le noeud de réseau (IWU, RNC) étant agencé afin de relayer une communication entre une première branche de connexion supportant un contrôle de flux sur un niveau de protocole de transmission inférieur sous-jacent à un niveau utilisateur, et une deuxième branche de connexion intermédiaire (Iu) reliée à un second noeud de réseau (RNC, IWU) relayant la communication vers et à partir d'une troisième branche de connexion supportant le contrôle de flux sur le niveau de protocole de transmission inférieur, **caractérisé en ce que** la deuxième branche (Iu) ne supporte pas le contrôle de flux sur le niveau de transmission inférieur, et **en ce que** le noeud de réseau (IWU, RNC) est agencé afin de tunnelliser les informations de contrôle de flux de niveau inférieur de manière transparente sur le niveau de protocole de transmission inférieur de la deuxième branche (Iu) entre lesdites première et troisième branches afin d'assurer un contrôle de flux de bout en bout et, ainsi, une intégrité des données sur la connexion sur la couche de protocole de transmission inférieur.

24. Noeud de réseau selon la revendication 23, **caractérisé en ce que** le noeud (IWU, RNC) est agencé afin de tunnelliser lesdites informations de contrôle de flux dans le cadre d'une signalisation de canal sur la deuxième branche (Iu).

25. Noeud de réseau selon la revendication 23 ou 14, **caractérisé en ce que** ladite deuxième branche (Iu) est une connexion d'ATM, et **en ce que** ledit niveau de protocole de transmission inférieur comprend une couche d'adaptation d'ATM.

26. Noeud de réseau selon la revendication 25, **caractérisé en ce que** le noeud (IWU, RNC) est agencé afin d'insérer les informations de contrôle de flux dans une unité de données de service de couche d'adaptation d'ATM.

27. Noeud de réseau selon la revendication 24, **caractérisé en ce que** ladite deuxième branche (Iu) est une connexion d'ATM, et **en ce que** le noeud (IWU, RNC) est agencé afin de tunnelliser les informations de contrôle de flux dans des cellules d'ATM dans une couche d'ATM sur la connexion d'ATM.

28. Noeud de réseau selon l'une quelconque des revendications 23 à 25, **caractérisé en ce que** le noeud (IWU, RNC) est agencé afin de tunnelliser lesdites informations de contrôle de flux dans le cadre d'une signalisation de canal situé en-dehors du trafic sur la deuxième branche (Iu).

29. Noeud de réseau selon l'une quelconque des revendications 23 à 28, **caractérisé en ce que** le noeud (IWU, RNC) est agencé afin de reconnaître un besoin de lancer ou d'arrêter un contrôle de flux vers la deuxième branche (Iu) et d'envoyer une demande d'activation de contrôle de flux ou une demande d'arrêt de contrôle de flux, respectivement, sur la deuxième branche (I), et le noeud (IWU, RNC) réagit à la réception d'une demande d'activation de contrôle de flux ou d'une demande d'arrêt de contrôle de flux afin d'arrêter ou de lancer, respectivement, l'envoi, ou la diminution et l'augmentation du débit des données, respectivement, vers la deuxième branche (Iu).

30. Noeud de réseau selon l'une quelconque des revendications 23 à 28, **caractérisé en ce que** le noeud (IWU, RNC) est agencé afin de reconnaître un besoin de lancer ou d'arrêter un contrôle de flux vers la deuxième branche (Iu) et d'envoyer une demande d'activation de contrôle de flux ou une demande d'arrêt de contrôle de flux, respectivement, sur la deuxième branche (Iu), et le noeud (IWU, RNC) réagit à la réception d'une demande d'activation de contrôle de flux ou d'une demande d'arrêt de contrôle de flux afin d'activer ou de désactiver, respectivement, le contrôle de flux vers la première ou la troisième branche.

31. Noeud de réseau selon l'une quelconque des revendications 23 à 28, **caractérisé en ce que** le noeud est agencé afin de reconnaître un besoin de lancer ou d'arrêter le contrôle de flux sur la base du statut d'une mémoire tampon de réception ou de transmission ou d'informations de contrôle de flux entrantes reçues sur la première ou la troisième branche.

32. Noeud de réseau selon l'une quelconque des revendications 23 à 31, **caractérisé en ce que** le système est un système de communication mobile, et **en ce que** le noeud est un élément de réseau (IWU, RNC) du système de communication mobile.

33. Noeud de réseau selon la revendication 32, **caractérisé en ce que** la première branche est l'interface radio entre une station mobile (MS) et l'élément de réseau (RNC).

34. Noeud de réseau selon la revendication 32 ou 33, **caractérisé en ce que** le noeud de réseau est un contrôleur de réseau radio (RNC).

35. Noeud de réseau selon la revendication 32, **caractérisé en ce que** le noeud de réseau est une unité d'interfonctionnement (IWU).
